(19)

**Europäisches Patentamt**

**European Patent Office**

**Office européen des brevets**

(11) **EP 3 708 840 B1**

(12) **EUROPÄISCHE PATENTSCHRIFT**

(45) Veröffentlichungstag und Bekanntmachung des Hinweises auf die Patenterteilung:
**26.02.2025   Patentblatt 2025/09**

(21) Anmeldenummer: **20187213.2**

(22) Anmeldetag: **22.07.2020**

(51) Internationale Patentklassifikation (IPC):
**F04C 29/12** *(2006.01)*   **F16K 1/54** *(2006.01)*
**F04C 18/02** *(2006.01)*   **F04C 25/02** *(2006.01)*
**F04C 29/06** *(2006.01)*   **F04C 29/00** *(2006.01)*

(52) Gemeinsame Patentklassifikation (CPC):
**F04C 29/126; F04C 18/0215; F04C 25/02;
F04C 29/06; F16K 1/36; F16K 15/026;
F16K 27/0209;** F04C 2220/50; F04D 19/04

(54) **VAKUUMPUMPE MIT RÜCKSCHLAGVENTIL**

VACUUM PUMP WITH CHECK VALVE

POMPE À VIDE AVEC CLAPET ANTIRETOUR

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(43) Veröffentlichungstag der Anmeldung:
**16.09.2020   Patentblatt 2020/38**

(60) Teilanmeldung:
**24216474.7 / 4 491 877**

(73) Patentinhaber: **Pfeiffer Vacuum Technology AG
35614 Asslar (DE)**

(72) Erfinder: **LATTA, Sebastian
35578 Wetzlar (DE)**

(74) Vertreter: **Manitz Finsterwald
Patent- und Rechtsanwaltspartnerschaft mbB
Martin-Greif-Strasse 1
80336 München (DE)**

(56) Entgegenhaltungen:
**EP-A2- 3 647 599      EP-A2- 3 739 166
DE-B4- 10 046 768      US-A- 4 973 230
US-A- 5 810 572**

**Beschreibung**

Die vorliegende Erfindung betrifft eine Vakuumpumpe, insbesondere Scrollpumpe, mit einem Rückschlagventil gemäß dem Oberbegriff des Anspruchs 1.

Rückschlagventile werden zum Beispiel in verschiedenen Vakuumgeräten eingesetzt. So kann etwa in einer Vakuumpumpe ein Gasballastventil mit einem integrierten Rückschlagventil ausgestattet sein. Ein Gasballastventil dient typischerweise dem Zweck, ein Ballastgas, wie zum Beispiel Luft oder ein anderes Gas oder Gasgemisch, in einen Pumpraum einer Vakuumpumpe zuzuführen. Dies dient beispielsweise dazu, ein Kondensieren des von der Vakuumpumpe zu fördernden Mediums oder einzelner Bestandteile desselben zu vermeiden, um die Pumpe vor Korrosion und Kondensatansammlung zu schützen. Auch kann das Zuführen von Ballastgas beispielsweise der Verdünnung des Prozessgases, also des zu fördernden Mediums, dienen.

Ein Rückschlagventil öffnet und schließt sich typischerweise aufgrund einer Druckdifferenz über das Ventil, gegebenenfalls in Abhängigkeit von einer Federkraft einer Feder, welche das Schließelement gegen den Dichtungssitz vorspannt.

Rückschlagventile sind als solche in vielen Gebieten bekannt. Beispielsweise offenbaren die Druckschriften EP 3 739 166 A2, EP 3 647 599 A2, US 4 973 230 A, DE 100 46 768 B4, US 5 810 572 A übliche Rückschlagventile in Vakuumpumpen und Verdichtersystemen.

Wenn das Schließelement bei einer Schließbewegung an dem Dichtungssitz anschlägt, verursacht dies ein Geräusch. Die Lautstärke dieses Geräusches ist unter anderem abhängig von der Geschwindigkeit des Schließelements, die von den Druckverhältnissen sowie gegebenenfalls einer Federkraft abhängt. Wenn sich der Druck auf wenigstens einer Seite des Ventils häufig oder kontinuierlich ändert, dann kommt es außerdem zu häufigen Ventilbetätigungen und somit zu häufigen Anschlägen des Schließelements am Dichtungssitz mit entsprechender Geräuschentwicklung.

Besonders relevant ist die vorstehend beschriebene Problematik bei Vakuumgeräten und insbesondere bei Vakuumpumpen. Bei Vakuumgeräten im Allgemeinen, beispielsweise auch bei einer Vakuumkammer, betrifft dies insbesondere einen Evakuierungsvorgang, also den Zeitraum, in dem ein zu evakuierender Bereich von einem Ausgangsdruck, beispielsweise atmosphärischem Druck, auf einen gewünschten Druck, nämlich einen Vakuumdruck, reduziert wird. Hierbei ändert sich der Druck laufend. Bei Vakuumpumpen kommt häufig hinzu, dass der Druck pulsiert. Dies ist je nach zugrundeliegendem Pumpprinzip mehr oder weniger stark ausgeprägt und gilt besonders für den Fall, dass das Rückschlagventil unmittelbar mit einem Pumpraum einer Vakuumpumpe verbunden ist.

Es ist eine Aufgabe der Erfindung, eine Vakuumpumpe mit einem Rückschlagventil der eingangs genannten Art bereitzustellen, welches im Betrieb eine besonders geringe Schallemission aufweist.

Diese Aufgabe wird durch eine Vakuumpumpe mit den Merkmalen des Anspruchs 1 gelöst.

Das Schließelement ist aufgrund der Verbindung zusammen mit dem Masseelement beweglich. Durch das zusätzliche Masseelement ist die Gesamtmasse der beweglichen Baugruppe aus Schließelement und Masseelement erhöht. Entsprechend ist die Trägheit erhöht. Dies führt dazu, dass das Schließelement bei gegebenen Druckverhältnissen lediglich geringere Geschwindigkeiten annimmt und in der Folge auch beim Anschlagen an den Dichtungssitz eine geringere Geschwindigkeit aufweist. Somit ergibt sich eine geringere Schallemission.

Zudem wird dieser technische Effekt mit äußerst einfachen Mitteln erreicht. Ein Masseelement kann letztlich eine beliebige Form aufweisen und lässt sich somit einfach herstellen.

Das Masseelement ist von dem Schließelement grundsätzlich separat ausgeführt, auch wenn es mit diesem verbunden ist. Dies bedeutet, dass das Schließelement und das Masseelement separat als unterschiedliche Teile hergestellt werden und anschließend miteinander verbunden werden. Dabei kommt grundsätzlich auch eine stoffschlüssige Verbindung, wie beispielsweise eine Schweißverbindung, in Betracht.

Das Masseelement dient dem Zweck, die Gesamtmasse der Baugruppe aus Schließelement und Masseelement zu erhöhen. So ist es etwa vorteilhaft, wenn das Masseelement wenigstens die gleiche Masse, also das gleiche Gewicht aufweist, wie das Schließelement. Besonders vorteilhaft ist es, wenn das Masseelement wenigstens die 1,5-fache Masse, weiter bevorzugt wenigstens die doppelte Masse, im Vergleich zu dem Schließelement aufweist. Das Schließelement weist grundsätzlich eine Masse $m_S$ auf, die z.B. wenigstens 1,5 g, bevorzugt wenigstens 2,0 g und/oder höchstens 3,0 g, bevorzugt höchstens 2,5 g betragen kann. Das Masseelement weist grundsätzlich eine Masse $m_M$ auf, die bevorzugt wenigstens 2,0 g, besonders bevorzugt wenigstens 3,0 g, und/oder höchstens 6,0 g, besonders bevorzugt höchstens 4,0 g betragen kann.

Durch das zusätzliche Masseelement ist die vorteilhafte Möglichkeit eröffnet, dass das Masseelement und das Schließelement aus unterschiedlichen Materialen hergestellt sind. Somit ist es möglich, dass die Materialien der beiden Elemente jeweils gezielt im Hinblick auf die Aufgabe des betreffenden Elements ausgewählt werden können. So kann zum Beispiel für das Schließelement ein Material ausgewählt werden, welches in Kooperation mit einem Dichtungssitz eine hohe Dichtigkeit erlaubt und dabei insbesondere einfach herstellbar ist. Das Material des Masseelements kann hingegen insbesondere nach seiner Dichte ausgewählt werden, da das Masseelement möglichst schwer sein soll.

Bei einer bevorzugten Ausführungsform weisen das Masseelement und das Schließelement unterschiedliche Materialen auf, wobei das Material des Masseelements eine höhere Dichte aufweist als das Material des Schließelements. Grundsätzlich können die Elemente, insoweit davon die Rede ist, dass sie ein Material "aufweisen", auch aus diesem Material hergestellt sein und/oder ausschließlich das Material aufweisen.

Besonders bevorzugt sind Ausführungsformen, bei denen das Material des Masseelements eine Dichte aufweist, die wenigstens doppelt so hoch, weiter bevorzugt wenigstens dreimal so hoch, ist, wie die Dichte des Materials des Schließelements.

Das Schließelement kann zum Beispiel aus Kunststoff hergestellt werden. Damit ist es einfach herstellbar, wobei allerdings eine gute Dichtigkeit erreicht werden kann. Grundsätzlich kann das Schließelement aber auch zum Beispiel aus Metall hergestellt werden. Gemäß einer besonders vorteilhaften Ausführungsform handelt es sich bei dem Material des Schließelements um Fluorkautschuk bzw. FKM.

Das Masseelement kann bevorzugt aus Metall hergestellt sein. Besonders eignet sich Stahl, da dieser eine relativ hohe Dichte aufweist, kostengünstig und gut verfügbar ist sowie einfach bearbeitbar ist. Das Masseelement kann aber beispielsweise ebenfalls aus Kunststoff hergestellt sein, bevorzugt aus einem Kunststoff mit hoher Dichte.

Der Dichtungssitz kann beispielsweise aus Metall oder auch aus Kunststoff hergestellt sein.

Gemäß einer Weiterbildung ist vorgesehen, dass das Masseelement mit dem Schließelement fest verbunden ist. Somit sind das Schließelement und das Masseelement ausschließlich gemeinsam und gleichförmig bewegbar. Dies erlaubt einerseits einen einfachen Aufbau und andererseits eine wirksame Schallreduzierung.

Alternativ zu einer festen Verbindung kann aber zum Beispiel auch eine elastische und/oder eine dämpfende Verbindung vorgesehen sein. So kann eine weitere Geschwindigkeitsreduzierung des Schließelements erreicht werden. Das Masseelement wirkt dabei wie ein Tilger.

Erfindungsgemäß ist eine Feder vorgesehen, welche das Schließelement gegen den Dichtungssitz vorspannt. Bevorzugt ist es, wenn das Masseelement unabhängig von der Feder mit dem Schließelement verbunden ist. Die Verbindung ist also insbesondere nicht durch die Feder selbst gebildet.

Das Masseelement kann mit dem Schließelement beispielsweise durch eine kraftschlüssige, eine formschlüssige und/oder eine stoffschlüssige Verbindung verbunden sein. Die Verbindung kann grundsätzlich lösbar oder unlösbar sein.

Beispielhafte Ausführungsformen umfassen, dass das Masseelement mit dem Schließelement durch eine Schraubverbindung, eine Rastverbindung, eine Pressverbindung, durch Widerhaken und/oder eine Verkantung verbunden ist. Einfache Lösungen umfassen zum Beispiel, dass das Masseelement in das Schließelement eingeschraubt oder eingesteckt ist, oder umgekehrt.

Bei der Feder kann es sich bevorzugt um eine Schraubendruckfeder handeln. Die Feder weist insbesondere eine Federkonstante k auf, die bevorzugt wenigstens 0,15 N/mm, weiter bevorzugt wenigstens 0,2 N/mm, und/oder höchstens 4 N/mm, weiter bevorzugt höchstens 3,0 N/mm, beträgt. Die Feder kann beispielsweise aus Stahl hergestellt sein.

Wenn die Baugruppe aus Masseelement und Schließelement mittels einer Feder gegen den Dichtungssitz vorgespannt ist, bildet diese Baugruppe zusammen mit der Feder ein schwingungsfähiges System, wobei die Baugruppe eine bewegliche Masse bildet. Die Bewegungsgleichung lautet:

$$F_m(t) + F_D(t) + F_F(t) = F_{ext}(t) \quad (1)$$

Dabei bezeichnet $F_{ext}$ die Anregungskraft. Diese ist hier durch die Druckdifferenz über das Ventil in Bezug auf die Querschnittsfläche definiert. $F_F$ bezeichnet die Rückstellkraft der Feder und ist im einfachsten Fall proportional zur Auslenkung. $F_D$ bezeichnet die Dämpfungskraft, die insbesondere proportional zur Geschwindigkeit der Auslenkung ist. Im einfachsten Fall wird damit eine dem System inhärente Dämpfung erfasst, zum Beispiel eine Dämpfung, die aus der Reibung zwischen Schließelement und/oder Masseelement einerseits und dem das Ventil durchströmenden Fluid andererseits resultiert. Eine reale Feder weist ebenfalls eine gewisse inhärente Dämpfung auf. Die dem System inhärenten Dämpfungen sind aber häufig klein und können somit zumindest bei groben Berechnungen vernachlässigt werden. Grundsätzlich ist es ferner denkbar, dass ein Dämpfungselement zur Dämpfung von Masse- und Schließelement vorgesehen ist. Schließlich bezeichnet $F_M$ alle weiteren auf die Masse ausgeübten Kräfte. Im Rückschlagventil sind aber typischerweise keine weiteren Kräfte wirksam, sodass auch dieser Term in den Berechnungen entfallen kann.

Die Masse des schwingungsfähigen Systems kann allerdings nicht frei schwingen, da der Dichtungssitz einen Anschlag im Bewegungsweg der Masse bildet.

Was die Anregungskraft bzw. die Druckdifferenz über das Ventil betrifft, so ist diese in der Realität nicht sinusförmig, sondern abhängig vom konkreten Gerät, welches mit dem Rückschlagventil ausgestattet ist, sowie vom Betriebszustand des Geräts. Eine klassische Berechnung ist damit nicht möglich, die Bewegungsdifferenzialgleichung ist nicht lösbar. So sind insbesondere für die klassische Lösung der Differenzialgleichungen zwei Terme nicht bekannt, nämlich der zeitliche Verlauf der Anregungskraft sowie die Dämpfung, zum Beispiel die Dämpfung durch Gasreibung.

Gleichwohl können gewisse Zusammenhänge auch aus bekannten Lösungen der Differenzialgleichung für ein frei schwingendes System abgeleitet werden.

Was das zugrunde liegende Problem der Schallemissionen betrifft, so können insbesondere die folgenden Annahmen getroffen werden: Die Lautstärke korreliert mit der Auslenkung der Masse und mit ihrer Geschwindigkeit. Im Rahmen der Erfindung ist es somit ein Ziel, diese beiden Größen zu beeinflussen, nämlich zu verkleinern.

Der in Formel (1) dargelegte Zusammenhang lässt sich somit durch die folgende Differenzialgleichung abbilden:

$$\ddot{x} + \frac{d}{m}\dot{x} + \frac{k}{m}x = F_{ext}(t) \qquad (2)$$

Dabei ist m die bewegliche Masse m = ms + $m_M$, also die Summe der Massen von Masseelement $m_S$ und Schließelement $m_M$, k ist die Federkonstante, d ist die Dämpfungskonstante und $\Omega$ ist die Anregungsfrequenz.

Nachfolgend wird die Dämpfung vernachlässigt, wobei aber ähnliche Zusammenhänge für den Fall mit Dämpfung demonstrierbar sind. Insbesondere gilt dies für den Fall einer geringen Dämpfung, wie sie im Kontext eines Rückschlagventils erwartet werden können, vor allem wenn das das Rückschlagventil durchströmende Medium gasförmig ist. Ferner gilt dies in besonderem Maße in einem Vakuumgerät, da hier meist Drücke von unter 1 atm vorliegen.

In Formel (2) beträgt unter Vernachlässigung der Dämpfung das Quadrat der Eigenfrequenz

$$\omega_0{}^2 = \frac{k}{m} \qquad (3)$$

und das Frequenzverhältnis

$$\eta = \frac{\Omega}{\omega_0} = \frac{\Omega}{\sqrt{k}}\sqrt{m} \qquad (4)$$

sowie die Vergrößerungsfunktion

$$V_{Amp} = \frac{1}{|1-\eta^2|} = \frac{1}{\left|1-\frac{\Omega^2}{k}m\right|} \qquad (5)$$

An Formel (5) lässt sich ablesen, dass eine große Masse m und eine kleine Federkonstante k sowie ein kleines Verhältnis k/m bewirken, dass die Vergrößerung der Auslenkungsamplitude klein ist. Dies gilt für den überkritischen Bereich, d. h. wenn

$$1 < \frac{\Omega^2}{k}m \qquad (6)$$

bzw. wenn

$$\frac{k}{m} < \Omega^2 \qquad (7)$$

Dabei kann $\Omega$ unbekannt oder schwierig zu bestimmen sein. Gleichwohl können vorteilhafte Werte für k/m abgeschätzt werden, bei denen mit hoher Wahrscheinlichkeit ein überkritischer Bereich eingehalten wird.

Vor diesem Hintergrund hat es sich für reale Systeme als besonders vorteilhaft gezeigt, wenn - und dies ist erfindungsgemäß vorgesehen - das Masseelement und das Schließelement zusammen eine Masse m aufweisen, wobei die Feder eine Federkonstante k aufweist und wobei das Verhältnis k/m höchstens 110.000 s$^{-2}$, bevorzugt höchstens 70.000 s$^{-2}$, besonders bevorzugt höchstens 50.000 s$^{-2}$, beträgt. Insbesondere haben sich diese Wertebereiche für Vakuumgeräte und besonders bevorzugt für Vakuumpumpen, insbesondere Scrollpumpen, und (nicht zur Erfindung gehörende) Kompressoren als vorteilhaft erwiesen. Ferner gelten die Wertebereiche mit besonderem Vorteil für den Fall, dass das Rückschlagventil zur Steuerung der Strömung durch ein Gasballastventil angeordnet ist.

Aus dem Vorstehenden ergibt es sich ferner, dass es vorteilhaft ist, wenn das Masseelement und das Schließelement zusammen mit der Feder ein schwingungsfähiges System bilden, wobei das System derart dimensioniert ist, dass es im Betrieb des Ventils im überkritischen Bereich betrieben wird.

Mit weiterem Vorteil kann es vorgesehen sein, dass das Schließelement und/oder der Dichtungssitz eine sphärische oder kegelförmige Anlagefläche zur Anlage mit dem Dichtungssitz bzw. dem Schließelement aufweist. Was den Dichtungssitz betrifft, so versteht es sich, dass die Anlagefläche ringförmig ist und den Durchgang umschließt. Was das Schließelement betrifft, so ist der Flächenbereich, der im Sperrzustand unmittelbar in Anlage mit der korrespondierenden Fläche des Dichtungssitzes steht, ebenfalls ringförmig. Allgemein kann bei dem Schließelement aber eine dem Dichtungssitz zugewandte Fläche sphärisch und dabei insbesondere im Querschnitt geschlossen und/oder nicht ringförmig sein.

Eine Weiterbildung sieht vor, dass das Schließelement eine Anlagefläche zur Anlage mit dem Dichtungssitz aufweist und das Masseelement auf einer der Anlagefläche abgewandten Seite des Schließelements angeordnet und/oder mit diesem verbunden ist.

Gemäß einer weiteren Ausführungsform kann das Masseelement im Innenbereich einer Feder, insbesondere einer Schraubenfeder, angeordnet sein. Dies erlaubt eine besonders kompakte Anordnung.

Das Masseelement kann zum Beispiel einen Verbindungsabschnitt und/oder einen Masseabschnitt aufweisen. Der Masseabschnitt kann bevorzugt wenigstens eine doppelt so hohe Masse aufweisen, wie der Verbindungsabschnitt. Der Verbindungsabschnitt und der Masseabschnitt können beispielsweise voneinander durch einen Absatz getrennt sein. Der Verbindungsabschnitt kann sich beispielsweise in eine Ausnehmung des Schließelements hinein erstrecken. So kann der Verbindungsabschnitt beispielsweise in die Ausnehmung eingeschraubt oder in dieser eingesteckt sein.

Grundsätzlich kann ein Verbindungsabschnitt des Masseelements und/oder des Schließelements beispielsweise wenigstens eine Erhebung aufweisen, die als Widerhaken wirkt. Bevorzugt können mehrere solcher Erhebungen vorgesehen sein. Die wenigstens eine Erhebung kann bevorzugt umlaufend ausgebildet sein.

Grundsätzlich kann das Masseelement ein einteiliges Element sein oder aus mehreren Bauteilen bestehen.

Wie bereits angedeutet, bewirkt das zusätzliche Masseelement eine Erhöhung der Masse und damit der Trägheit der im Rückschlagventil beweglichen Baugruppe. Diese Trägheit wirkt sich auch auf den Gasstrom aus, also die Menge an Gas, die das Rückschlagventil bei gegebenen Druckverhältnissen pro Zeiteinheit passieren kann. Dieser Zusammenhang kann auch zu dem Zweck ausgenutzt werden, den Gasstrom so einzustellen, wie es gewünscht ist. In diesem Zusammenhang ist anzumerken, dass der Gasstrom auch in erheblichem Maße von der Kraft einer gegebenenfalls vorhandenen Feder im Rückschlagventil abhängig ist.

Vorteilhafter Weise können eine Vakuumpumpe oder ein (nicht zur Erfindung gehörender) Kompressor, welche ein Gasballastventil aufweisen, mit einem Rückschlagventil nach vorstehend beschriebener Art ausgestattet sein, wobei das Rückschlagventil insbesondere zur Steuerung der Strömung durch das Gasballastventil angeordnet ist. D.h. das Rückschlagventil erlaubt den Gasstrom durch das Gasballastventil in einer Richtung und sperrt den Gasstrom in der entgegengesetzten Richtung. Bevorzugt ist dabei das Rückschlagventil derart angeordnet, dass ein Austreten von Gas aus der Vakuumpumpe bzw. dem Kompressor, insbesondere aus einem Pumpraum, verhindert wird, wohingegen ein Einleiten von Ballastgas möglich ist.

Gemäß einer Ausführungsform der Erfindung umfasst die Vakuumpumpe ein Gasballastventil, wobei das Rückschlagventil zur Steuerung der Strömung durch das Gasballastventil angeordnet ist.

Das Rückschlagventil kann beispielsweise in das Gasballastventil integriert sein oder diesem vor- oder nachgeschaltet sein.

Die Vakuumpumpe oder der (nicht zur Erfindung gehörende) Kompressor umfasst bevorzugt einen Pumpenkörper, dessen Innenseite einen Pumpraum begrenzt und an dessen Außenseite ein Gasballastventil zur Steuerung der Zufuhr eines Ballastgases in den Pumpraum angeordnet ist.

Die vorliegende Offenbarung betrifft ferner eine Vakuumpumpe, insbesondere Scrollpumpe, oder einen Kompressor mit einem Gasballastventil und einem Rückschlagventil, insbesondere einem solchen nach vorstehend beschriebener Art, wobei das Rückschlagventil zur Steuerung der Strömung durch das Gasballastventil angeordnet ist, wobei das Rückschlagventil einen Durchgang für ein Fluid sowie ein bewegliches Schließelement und einen Dichtungssitz umfasst, wobei das Schließelement und der Dichtungssitz derart korrespondierend ausgebildet sind, dass das Schließelement den Durchgang sperrt, wenn es sich in Anlage mit dem Dichtungssitz befindet, wobei das Rückschlagventil eine Feder mit einer Federkonstante k aufweist, welche das Schließelement gegen den Dichtungssitz vorspannt, wobei das Rückschlagventil eine bewegliche Masse m aufweist, welche zumindest teilweise vom Schließelement gebildet ist, und wobei ein von der beweglichen Masse und der Feder gebildetes, schwingungsfähiges System so dimensioniert ist, dass es im überkritischen Bereich betrieben wird, und/oder wobei $k/m \leq 110.000 \ s^{-2}$.

Ein tragender Gedanke der Erfindung besteht darin, dass die im Rückschlagventil bewegliche Masse m besonders groß sein soll, insbesondere in Bezug auf eine Federkonstante k, sofern eine Feder vorhanden ist. Dies bewirkt mit einfachen Mitteln eine vorteilhafte Reduzierung der Schallemission im Betrieb. Was das Rückschlagventil im Allgemeinen betrifft, wird dieser Gedanke - wie oben beschrieben - durch ein zusätzliches Masseelement realisiert. Grundsätzlich kann aber auch das Schließelement selbst eine hohe Masse aufweisen (wobei ein Schließelement ohne separat ausgeführtes Masseelement nicht zur Erfindung gehört), um eine Schallemission zu reduzieren. So hat es sich insbesondere im konkreten Kontext einer Vakuumpumpe mit Gasballastventil als vorteilhaft gezeigt, wenn $k/m \leq 110.000 \ s^{-2}$, bevorzugt $k/m \leq 70.000 \ s^{-2}$, besonders bevorzugt $k/m \leq 50.000 \ s^{-2}$. Dies bildet somit im Kontext der genannten Vakuumpumpe die Realisierung des tragenden Gedankens, dass eine hohe Masse, insbesondere in Bezug auf die Federkonstante k angestrebt werden soll.

Die vorliegende Offenbarung ist grundsätzlich auch auf ein gegenwärtig nicht separat beanspruchtes Verfahren zur Herstellung eines Rückschlagventils nach vorstehend beschriebener Art und/oder eines Vakuumgeräts mit einem solchen gerichtet, wobei das Masseelement und das Schließelement separat voneinander hergestellt werden und anschließend verbunden werden.

Die Erfindung wird nachfolgend lediglich beispielhaft anhand der schematischen Zeichnungen erläutert.

Fig. 1      zeigt eine Scrollpumpe in einer Schnittansicht.

Fig. 2      zeigt ein Elektronikgehäuse der Scrollpumpe.

Fig. 3      zeigt die Scrollpumpe in perspektivischer Ansicht, wobei ausgewählte Elemente freigestellt sind.

Fig. 4          zeigt einen in die Pumpe integrierten Drucksensor.

Fig. 5          zeigt ein bewegliches Spiralbauteil der Pumpe.

Fig. 6          zeigt das Spiralbauteil von einer anderen, der in Fig. 5 sichtbaren Seite gegenüberliegenden Seite.

Fig. 7          zeigt eine Einspannvorrichtung für ein Spiralbauteil.

Fig. 8 und 9    zeigen jeweils eine Exzenterwelle mit einem Ausgleichsgewicht von unterschiedlichen Scrollpumpen.

Fig. 10         zeigt ein Gasballastventil mit einem Betätigungsgriff in perspektivischer Ansicht.

Fig. 11         zeigt das Ventil der Fig. 10 in einer Schnittansicht.

Fig. 12         zeigt einen Teilbereich des Spiralbauteils der Fig. 5 und 6.

Fig. 13         zeigt einen Querschnitt des Spiralbauteils durch die Spiralwand in einem äußeren Endbereich.

Fig. 14         zeigt eine Luftleithaube der Scrollpumpe der Fig. 1 in perspektivischer Ansicht.

Fig. 15         zeigt ein Abdrückgewinde in einer Schnittdarstellung.

Fig. 16         zeigt ein Gasballastventil in einer Draufsicht.

Fig. 17         zeigt das Ventil der Fig. 16 in einer Schnittansicht mit Schnittebene entlang der in Fig. 16 gekennzeichneten Linie B:B.

Fig. 18         zeigt eine Ausführungsform eines Masseelements.

Fig. 19         zeigt einen Teilausschnitt X der Fig. 18 in vergrößerter Ansicht.

Fig. 20         illustriert in einer derjenigen der Fig. 19 entsprechenden Ansicht eine alternative Ausführungsform eines Masseelements.

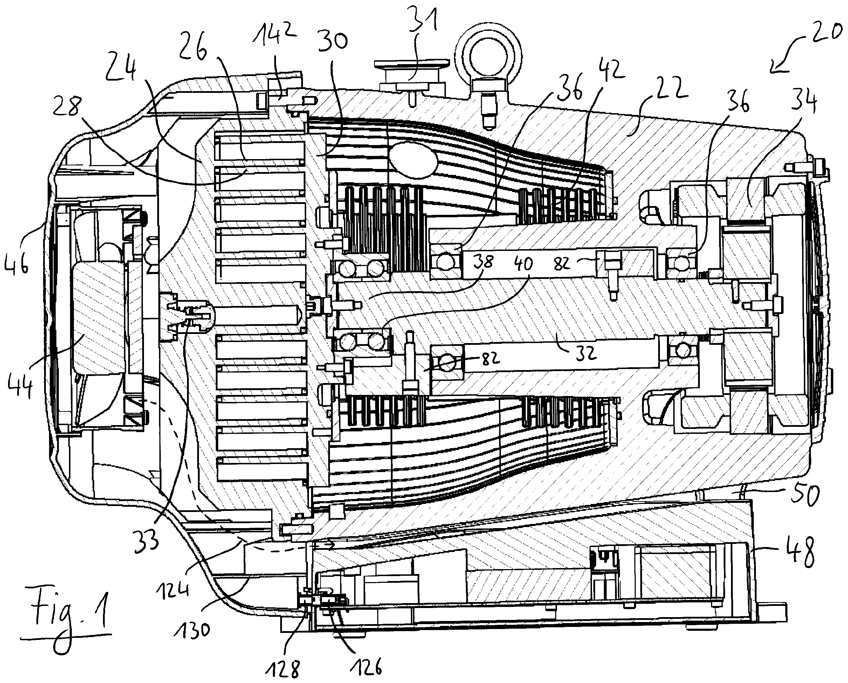

Die Fig. 1 zeigt eine als Scrollpumpe 20 ausgebildete Vakuumpumpe. Diese umfasst ein erstes Gehäuseelement 22 und ein zweites Gehäuseelement 24, wobei das zweite Gehäuseelement 24 eine pumpaktive Struktur aufweist, nämlich eine Spiralwand 26. Das zweite Gehäuseelement 24 bildet also ein feststehendes Spiralbauteil der Scrollpumpe 20. Die Spiralwand 26 wirkt mit einer Spiralwand 28 eines beweglichen Spiralbauteils 30 zusammen, wobei das bewegliche Spiralbauteil 30 zum Erzeugen einer Pumpwirkung über eine Exzenterwelle 32 exzentrisch erregt wird. Dabei wird ein zu pumpendes Gas von einem Einlass 31, welcher im ersten Gehäuseelement 22 definiert ist, zu einem Auslass 33 gefördert, welcher im zweiten Gehäuseelement 24 definiert ist.

Die Exzenterwelle 32 ist durch einen Motor 34 angetrieben und durch zwei Wälzlager 36 gelagert. Sie umfasst einen exzentrisch zu ihrer Rotationsachse angeordneten Exzenterzapfen 38, der über ein weiteres Wälzlager 40 seine exzentrische Auslenkung an das bewegliche Spiralbauteil 30 überträgt. An dem beweglichen Spiralbauteil 30 ist zwecks Abdichtung außerdem ein in Fig. 1 linksseitiges Ende eines Wellbalgs 42 befestigt, dessen rechtsseitiges Ende an dem ersten Gehäuseelement 22 befestigt ist. Das linksseitige Ende des Wellbalgs 42 folgt der Auslenkung des beweglichen Spiralbauteils 30.

Die Scrollpumpe 20 umfasst einen Lüfter 44 zur Erzeugung eines Kühlluftstromes. Für diesen Kühlluftstrom ist eine Luftleithaube 46 vorgesehen, an der der Lüfter 44 auch befestigt ist. Die Luftleithaube 46 und die Gehäuseelemente 22 und 24 sind derart geformt, dass der Kühlluftstrom im Wesentlichen das gesamte Pumpengehäuse umströmt und somit eine gute Kühlleistung erreicht.

Die Scrollpumpe 20 umfasst ferner ein Elektronikgehäuse 48, in dem eine Steuerungseinrichtung und Leistungselektronikkomponenten zum Antrieb des Motors 34 angeordnet sind. Das Elektronikgehäuse 48 bildet außerdem einen Standfuß der Pumpe 20. Zwischen dem Elektronikgehäuse 48 und dem ersten Gehäuseelement 22 ist ein Kanal 50 sichtbar, durch den ein vom Lüfter 44 erzeugter Luftstrom am ersten Gehäuseelement 22 und auch am Elektronikgehäuse 48 entlanggeführt ist, sodass beide wirksam gekühlt werden.

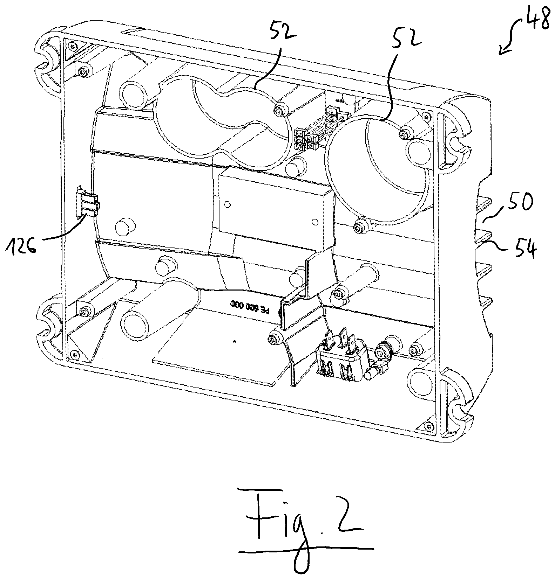

Das Elektronikgehäuse 48 ist in Fig. 2 näher veranschaulicht. Es umfasst mehrere gesonderte Kammern 52. In diesen Kammern 52 können Elektronikkomponenten vergossen werden und sind somit vorteilhaft abgeschirmt. Bevorzugt kann beim Vergießen der Elektronikkomponenten eine möglichst minimale Menge des Vergussmaterials verwendet werden. Zum Beispiel kann zuerst das Vergussmaterial in die Kammer 52 eingebracht werden und anschließend die Elektronikkomponente hineingedrückt werden. Vorzugsweise können die Kammern 52 so ausgeführt sein, dass verschiedene Varianten der Elektronikkomponenten, insbesondere verschiedene Bestückungsvarianten einer Platine, in dem Elektronikgehäuse 48 angeordnet werden können und/oder vergossen werden können. Für bestimmte Varianten können dabei auch einzelne Kammern 52 leer bleiben, also keine Elektronikkomponente aufweisen. So kann auf einfache Weise ein sogenanntes Baukastensystem für verschiedene Pumpentypen realisiert werden. Das Vergussmaterial kann insbesondere wärmeleitend und/oder elektrisch isolierende ausgebildet sein.

An einer in Bezug auf Fig. 2 hinteren Seite des Elektronikgehäuses 48 sind mehrere Wände oder Rippen 54 ausgebildet, die mehrere Kanäle 50 zum Leiten eines Kühlluftstromes definieren. Die Kammern 52 ermöglichen außerdem eine besonders gute Wärmeabfuhr von den in ihnen angeordneten Elektronikkomponenten, insbesondere in Verbindung mit einem wärmeleitenden Vergussmaterial, und hin zu den Rippen 54. Die Elektronikkomponenten lassen sich somit besonders wirksam kühlen und ihre Lebensdauer wird verbessert.

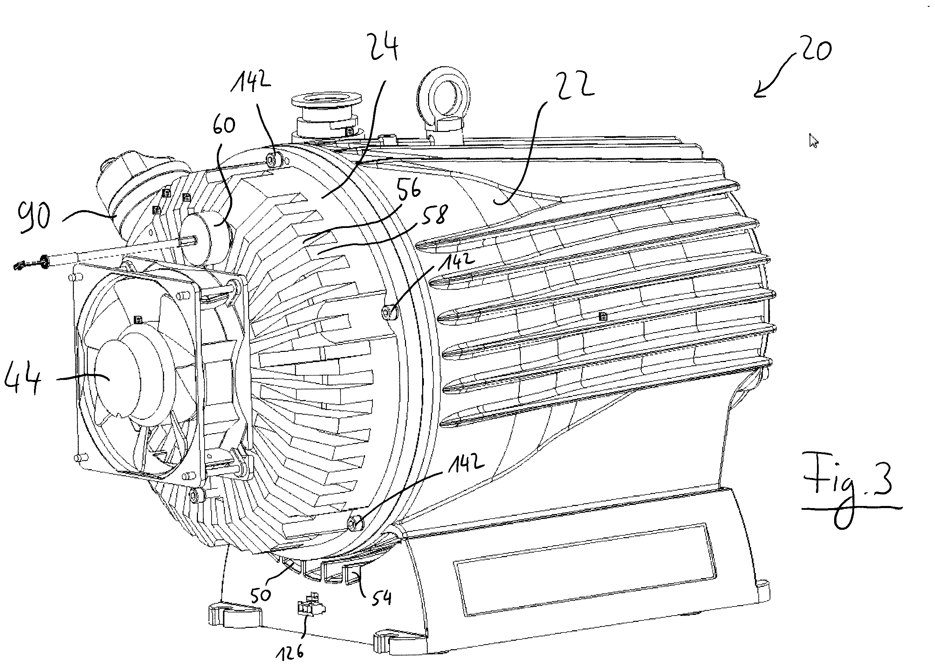

In Fig. 3 ist die Scrollpumpe 20 als Ganzes perspektivisch dargestellt, wobei jedoch die Luftleithaube 46 ausgeblendet ist, sodass insbesondere das feststehende Spiralbauteil 24 und der Lüfter 44 sichtbar sind. An dem feststehenden Spiralbauteil 24 sind mehrere, sternförmig angeordnete Ausnehmungen 56 vorgesehen, die jeweils zwischen den Ausnehmungen 56 angeordnete Rippen 58 definieren. Der vom Lüfter 44 erzeugte Kühlluftstrom führt durch die Ausnehmungen 56 und vorbei an den Rippen 58 und kühlt so das feststehende Spiralbauteil 24 besonders wirksam. Dabei umströmt der Kühlluftstrom zunächst das feststehende Spiralbauteil 24 und erst anschließend das erste Gehäuseelement 22 bzw. das Elektronikgehäuse 48. Diese Anordnung ist besonders vorteilhaft, da der pumpaktive Bereich der Pumpe 20 aufgrund der Kompression im Betrieb eine hohe Wärmeentwicklung aufweist und daher hier vorrangig gekühlt wird.

Die Pumpe 20 umfasst einen in diese integrierten Drucksensor 60. Dieser ist innerhalb der Luftleithaube 46 angeordnet und in das feststehende Spiralbauteil 24 eingeschraubt. Der Drucksensor 60 ist über eine nur teilweise dargestellte Kabelverbindung mit dem Elektronikgehäuse 48 und einer darin angeordneten Steuerungseinrichtung verbunden. Dabei ist der Drucksensor 60 in die Steuerung der Scrollpumpe 20 eingebunden. Zum Beispiel kann der Motor 34, der in Fig. 1 sichtbar ist, in Abhängigkeit von einem vom Drucksensor 60 gemessenen Druck angesteuert werden. Z.B. beim Einsatz der Pumpe 20 in einem Vakuumsystem als Vorpumpe für eine Hochvakuumpumpe kann beispielsweise die Hochvakuumpumpe nur dann eingeschaltet werden, wenn der Drucksensor 60 einen ausreichend niedrigen Druck misst. So kann die Hochvakuumpumpe vor einer Beschädigung geschützt werden.

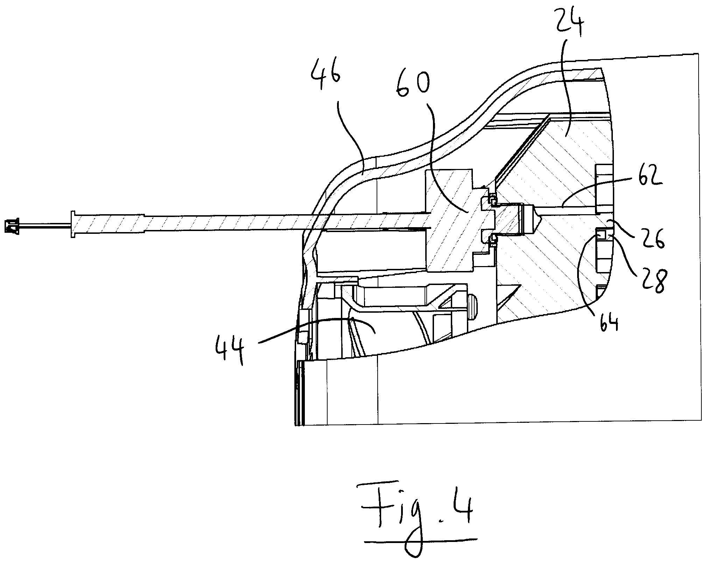

Fig. 4 zeigt den Drucksensor 60 und seine Anordnung am feststehenden Spiralbauteil 24 in einer Querschnittsdarstellung. Für den Drucksensor 60 ist ein Kanal 62 vorgesehen, der hier in einen nicht pumpaktiven Außenbereich zwischen den Spiralwänden 26 und 28 der feststehenden bzw. beweglichen Spiralbauteile 24 und 30 mündet. Somit misst der Drucksensor einen Ansaugdruck der Pumpe. Alternativ oder zusätzlich kann beispielsweise auch ein Druck zwischen den Spiralwänden 26 und 28 in einem pumpaktiven Bereich gemessen werden. Je nach Position des Drucksensors 60 bzw. des Kanals 62 können also zum Beispiel auch Zwischendrücke gemessen werden.

Der Drucksensor 60 erlaubt, zum Beispiel über die Ermittlung einer Kompression, insbesondere eine Erkennung eines Verschleißzustandes der pumpaktiven Komponenten, insbesondere eines auch als Tip Seal bezeichneten Dichteelements 64. Weiterhin kann der gemessene Ansaugdruck auch zu einer Regelung der Pumpe verwendet werden (u. a. Pumpendrehzahl). So kann beispielsweise ein Ansaugdruck softwareseitig vorgegeben werden und durch Variation der Pumpendrehzahl ein Ansaugdruck eingestellt werden. Auch ist denkbar, dass abhängig vom gemessenen Druck ein verschleißbedingter Druckanstieg durch Drehzahlsteigerung kompensiert werden kann. Somit kann ein Tip Seal-Wechsel verschoben werden bzw. größere Wechselintervalle realisiert werden. Die Daten des Drucksensors 60 können also generell z.B. zur Verschleißbestimmung, zur situativen Steuerung der Pumpe, zur Prozesskontrolle, etc. verwendet werden.

Der Drucksensor 60 kann zum Beispiel optional vorgesehen sein. Anstelle des Drucksensors 60 kann beispielsweise ein Blindstopfen zum Verschließen des Kanals 62 vorgesehen sein. Ein Drucksensor 60 kann dann beispielsweise bei Bedarf nachgerüstet werden. Insbesondere im Hinblick auf die Nachrüstung, aber auch generell vorteilhaft, kann vorgesehen sein, dass der Drucksensor 60 beim Anschließen an die Steuerungseinrichtung der Pumpe 20 automatisch erkannt wird.

Der Drucksensor 60 ist im Kühlluftstrom des Lüfters 44 angeordnet. Hierdurch wird auch er vorteilhaft gekühlt. Dies hat außerdem zur Folge, dass keine besonderen Maßnahmen für eine höhere Temperaturbeständigkeit des Drucksensors 60 zu treffen sind und folglich ein kostengünstiger Sensor eingesetzt werden kann.

Außerdem ist der Drucksensor 60 insbesondere derart angeordnet, dass die äußeren Abmessungen der Pumpe 20 durch ihn nicht vergrößert sind und die Pumpe 20 folglich kompakt bleibt.

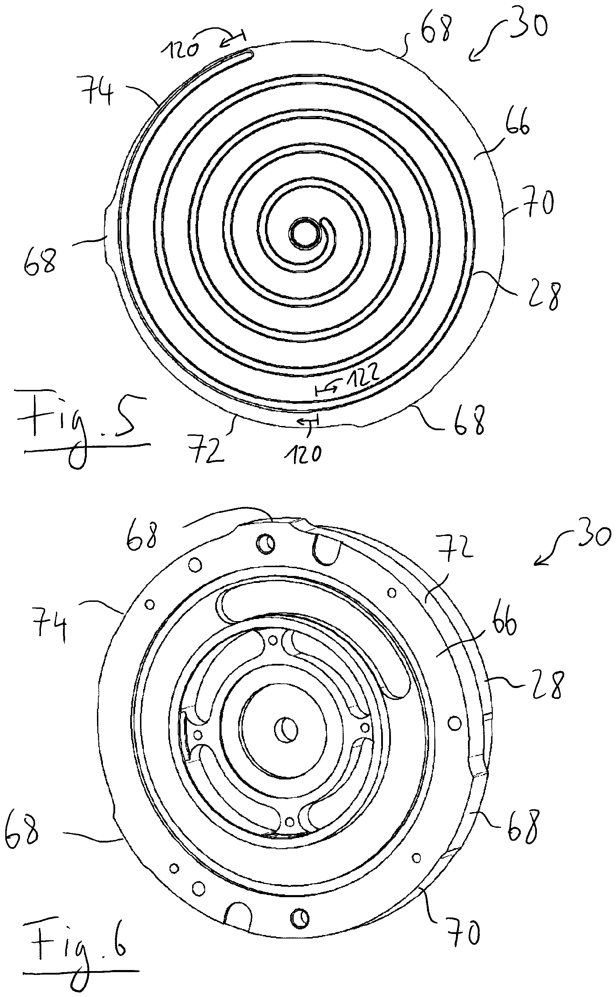

In den Fig. 5 und 6 ist das bewegliche Spiralbauteil 30 in verschiedenen Ansichten gezeigt. In Fig. 5 ist die spiralförmige Struktur der Spiralwand 28 besonders gut sichtbar. Neben der Spiralwand 28 umfasst das Spiralbauteil 30 eine Grundplatte 66, ausgehend von der sich die Spiralwand 28 erstreckt.

Eine der Spiralwand 28 abgewandte Seite der Grundplatte 66 ist in Fig. 6 sichtbar. An dieser Seite umfasst die Grundplatte unter anderem mehrere Befestigungsausnehmungen, etwa zur Befestigung des Lagers 40 und des Wellbalgs 42, die in Fig. 1 sichtbar sind.

Außen an der Grundplatte 66 sind drei über den Umfang der Grundplatte 66 beabstandete und gleichmäßig über den Umfang verteilte Haltevorsprünge 68 vorgesehen. Die Haltevorsprünge 68 erstrecken sich dabei radial nach außen. Die Haltevorsprünge 68 weisen insbesondere alle die gleiche radiale Höhe auf.

Zwischen zwei der Haltevorsprünge 68 erstreckt sich ein erster Zwischenabschnitt 70 des Umfangs der Grundplatte 66. Dieser erste Zwischenabschnitt 70 weist eine größere radiale Höhe auf als ein zweiter Zwischenabschnitt 72 und als ein dritter Zwischenabschnitt 74. Der erste Zwischenabschnitt 70 ist einem äußersten 120°-Abschnitt der Spiralwand 28 gegenüberliegend angeordnet.

Bei der Herstellung des beweglichen Spiralbauteils 30 werden bevorzugt die Grundplatte 66 und die Spiralwand 28 aus einem Vollmaterial gemeinsam spannend hergestellt, d. h. die Spiralwand 28 und die Grundplatte 66 sind einteilig ausgebildet.

Zum Beispiel bei einer Schlichtbearbeitung kann das Spiralbauteil 30 an den Haltevorsprüngen 68 direkt eingespannt sein. Im Rahmen ein und derselben Einspannung kann zum Beispiel auch die in Fig. 6 gezeigte Seite der Grundplatte 66 bearbeitet werden, insbesondere die Befestigungsausnehmungen eingebracht werden. Grundsätzlich kann im Rahmen dieser Einspannung auch die spanende Herstellung der Spiralwand 28 aus dem Vollmaterial erfolgen.

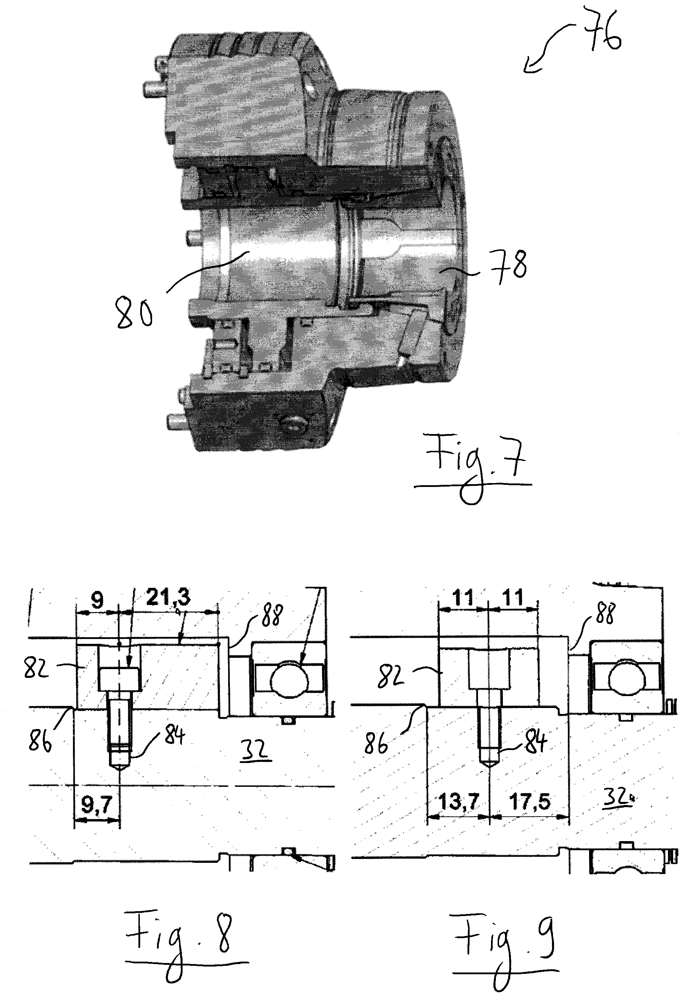

Das Spiralbauteil 30 kann zu diesem Zweck beispielsweise mit einer Einspannvorrichtung 76 eingespannt sein, wie sie in Fig. 7 gezeigt ist. Diese weist ein hydraulisches Dreibackenfutter 78 zur direkten Anlage an den drei Haltevorsprüngen 68 auf. Außerdem weist die Einspannvorrichtung 76 eine durchgehende Ausnehmung 80 auf, durch die ein Werkzeugzugang zu dem Spiralbauteil 30, insbesondere zu der in Fig. 6 gezeigten Seite desselben, ermöglicht ist. Somit können Bearbeitungsvorgänge von beiden Seiten während einer Einspannung erfolgen, insbesondere wenigstens eine Schlichtbearbeitung der Spiralwand 28 und ein Einbringen von Befestigungsausnehmungen.

Die Kontur der Haltevorsprünge 68 und der Spanndruck der Einspannvorrichtung 76 sind bevorzugt so gewählt, dass keine kritischen Verformungen des Spiralbauteils 30 stattfinden. Die drei Haltevorsprünge 68 sind bevorzugt so gewählt, dass die äußere Dimension, also der maximale Durchmesser des Spiralbauteils 30 nicht vergrößert werden. Somit kann zum einen Material und zum anderen Zerspanungsvolumen eingespart werden. Die Haltevorsprünge 68 sind insbesondere so ausgeführt und/oder an einer solchen Winkelposition angeordnet, dass die Zugänglichkeit der Verschraubung des Wellbalgs 42 gegeben ist. Die Anzahl der Verschraubungspunkte des Wellbalgs 42 ist bevorzugt ungleich der Anzahl der Haltevorsprünge 68 am beweglichen Spiralbauteil 30.

An der Exzenterwelle 32 der Fig. 1 sind zwei Ausgleichsgewichte 82 zum Ausgleich einer Unwucht des erregten Systems angebracht. Der Bereich des in Fig. 1 rechtsseitigen Ausgleichsgewichts 82 ist in Fig. 8 vergrößert dargestellt. Das Ausgleichsgewicht 82 ist an der Exzenterwelle 32 festgeschraubt.

Ein ähnlicher Bildausschnitt ist in Fig. 9 für eine andere Scrollpumpe gezeigt, die bevorzugt derselben Baureihe der Pumpe 20 der Fig. 1 angehört. Die der Fig. 9 zugrunde liegende Pumpe weist insbesondere andere Dimensionen auf und benötigt daher ein anderes Ausgleichsgewicht 82.

Die Exzenterwellen 32, die Ausgleichsgewichte 82 und die Gehäuseelemente 22 sind so dimensioniert, dass an der jeweils gezeigten Befestigungsposition nur eine bestimmte Art der zwei gezeigten Arten von Ausgleichsgewichten 82 an der Exzenterwelle 32 montierbar ist.

Die Ausgleichsgewichte 82 sind in den Fig. 8 und 9 zusammen mit bestimmten Abmessungen des für sie vorgesehenen Bauraumes bemaßt, um zu verdeutlichen, dass das Ausgleichsgewicht 82 der Fig. 9 nicht an der Exzenterwelle 32 montierbar ist und umgekehrt. Es versteht sich, dass die angegebenen Maße rein beispielhaft genannt sind.

So beträgt in Fig. 8 ein Abstand zwischen einer Befestigungsbohrung 84 und einem Wellenabsatz 86 9,7 mm. Das Ausgleichsgewicht 82 der Fig. 8 ist in der entsprechenden Richtung kürzer ausgebildet, nämlich 9 mm lang, kann also problemlos montiert werden. Das Ausgleichsgewicht 82 der Fig. 9 weist jeweils gemessen von der Befestigungsbohrung eine Längserstreckung von 11 mm auf. Somit ist das Ausgleichsgewicht 82 der Fig. 9 nicht an der Exzenterwelle 32 der Fig. 8 montierbar, da der Wellenabsatz 86 mit dem Ausgleichsgewicht 82 bei einer versuchten Montage kollidiert bzw. da somit das Ausgleichsgewicht 82 der Fig. 9 nicht vollständig in Anlage mit der Exzenterwelle 82 der Fig. 8 gebracht werden kann. Dadurch, dass das Ausgleichsgewicht 82 der Fig. 9 in beiden bemaßten Dimensionen größer ist als der Abstand von Befestigungsbohrung 84 und Wellenabsatz 86 in Fig. 8, ist auch eine Montage in umgedrehter Richtung verhindert. Zudem verhindert die Dimension von 21,3 mm des Ausgleichsgewichts 82 der Fig. 8 eine umgedrehte und folglich falsche Montageausrichtung des ansonsten richtigen Ausgleichsgewichts 82.

In Fig. 9 beträgt ein Abstand in Längsrichtung zwischen der Befestigungsbohrung 84 und einer Gehäuseschulter 88 17,5 mm. Das Ausgleichsgewicht 82 der Fig. 8 mit seiner Erstreckung von 21,3 mm würde beim Einschieben der Exzenterwelle 32 der Fig. 9 mit der Gehäuseschulter 88 kollidieren, sodass keine vollständige Montage möglich wäre. Die falsche Montage ist zwar zunächst möglich, wird aber zuverlässig erkannt. Bei einer um die Achse der Befestigungsbohrung 84 verdrehten Montage des Ausgleichsgewicht 82 der Fig. 8 an der Exzenterwelle 32 der Fig. 9 würde die Erstreckung von 21,3 mm mit der Wellenschulter 86 kollidieren, die nur in einem Abstand von 13,7 mm von der Befestigungsbohrung 84 angeordnet ist.

Die Ausgleichsgewichte 82, insbesondere ein motorseitiges Ausgleichsgewicht 82, sind allgemein so ausgeführt, dass eine Verwechslung des Ausgleichsgewichts mit solchen anderer Baugrößen bei der Montage und/oder beim Service vermieden wird. Die Ausgleichsgewichte werden bevorzugt mittels Durchgangsschrauben befestigt. Ähnliche Ausgleichsgewichte verschiedener Pumpengrößen sind insbesondere so ausgeführt, dass aufgrund angrenzender Absätze auf der Welle, der Positionen von Gewinde und Durchgangsbohrung des Ausgleichsgewichts sowie von Absätzen innerhalb des Gehäuses eine Montage des falschen Ausgleichsgewichts verhindert wird.

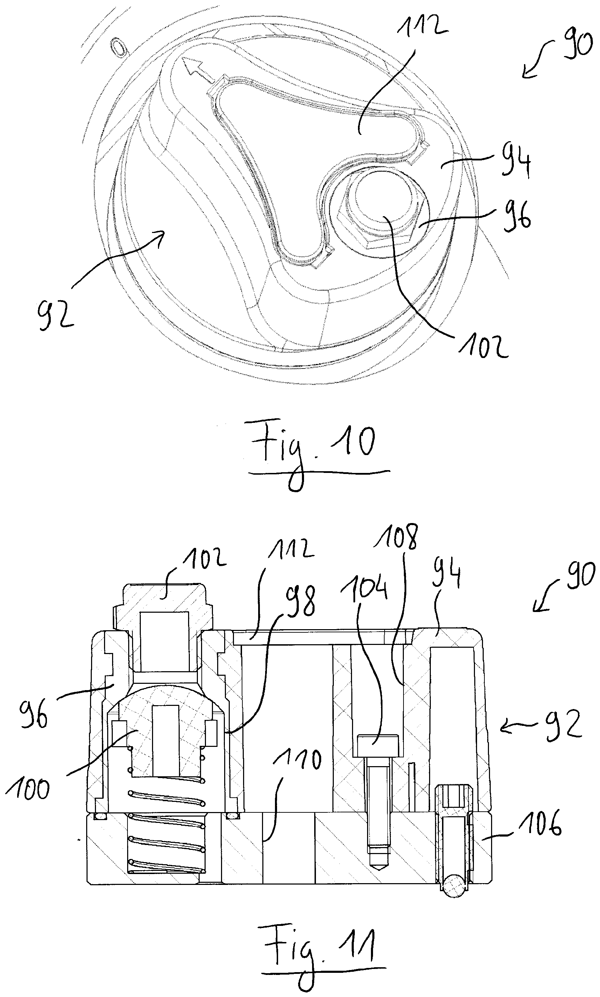

In den Fig. 10 und 11 ist ein Gasballastventil 90 der Scrollpumpe 20 gezeigt. Dieses ist auch in der Gesamtdarstellung der Pumpe 20 in Fig. 3 sichtbar und am feststehenden Spiralbauteil 24 angeordnet.

Das Gasballastventil 90 umfasst einen Betätigungsgriff 92. Dieser umfasst einen Kunststoffkörper 94 und ein Basiselement 96, welches bevorzugt aus Edelstahl hergestellt ist. Das Basiselement 96 umfasst eine durchgehende Bohrung 98, die einerseits zum Anschluss und Einleiten eines Ballastgases vorgesehen ist und andererseits ein Rückschlagventil 100 umfasst. Die Bohrung 98 ist außerdem in den Darstellungen mittels eines Stopfens 102 verschlossen. Anstelle des Stopfens 102 kann beispielsweise auch ein Filter vorgesehen sein, wobei das Ballastgas bevorzugt Luft sein kann und über den Filter insbesondere direkt in das Ventil 90 eintritt.

Der Betätigungsgriff 92 ist mit drei Befestigungsschrauben 104 an einem drehbaren Element 106 des Ventils 90 befestigt, die in einer jeweiligen Bohrung 108 angeordnet sind und von denen in der gewählten Schnittdarstellung der Fig. 11 nur eine sichtbar ist. Das drehbare Element 106 ist mit einer nicht dargestellten, durch eine Bohrung 110 verlaufende Befestigungsschraube am zweiten Gehäuseelement 24 drehbar befestigt.

Zur Betätigung des Ventils 90 wird ein manuell am Betätigungsgriff 92 angelegtes Drehmoment an das drehbare Element 106 übertragen und dieses somit gedreht. Somit gelangt die Bohrung 98 in Kommunikation mit einem Inneren des Gehäuses. Für das Ventil 90 sind dabei drei Schaltstellungen vorgesehen, nämlich die in Fig. 10 dargestellte, welche eine Sperrstellung ist, und jeweils eine nach rechts und nach links verdrehte Stellung, in denen die Bohrung 98 mit unterschiedlichen Bereichen des Inneren des Gehäuses in Kommunikation steht.

Die Bohrungen 108 und 110 sind durch einen Deckel 112 verschlossen. Die Dichtwirkung des Gasballastventiles 90 beruht auf axial verpressten O-Ringen. Bei Betätigung des Ventils 90 wird eine Relativbewegung auf die O-Ringe ausgeübt. Gelangen Verschmutzungen, wie etwa Partikel, an die Oberfläche eines O-Rings, so birgt dies die Gefahr eines frühzeitigen Ausfalls. Der Deckel 112 verhindert ein Eindringen von Verschmutzungen und ähnlichem an die Schrauben des Griffes 92.

Dieser Deckel 112 wird über eine Übermaßpassung dreier Zentrierelemente befestigt. Konkret weist der Deckel 112 für jede Bohrung 108 einen nicht dargestellten Einsteckzapfen auf, mit denen der Deckel 112 in den Bohrungen 108 gehalten ist. Die Bohrungen 108 und 110 sowie die darin angeordneten Befestigungsschrauben sind somit vor Verschmutzungen geschützt. Insbesondere bei der in der Bohrung 110 angeordneten, nicht dargestellten Befestigungsschraube, die eine Drehbewegung erlaubt, kann so ein Verschmutzungseintrag in die Ventilmechanik wirksam minimiert werden und so die Lebensdauer des Ventils verbessert werden.

Der Kunststoff-Griff mit umspritzem Edelstahl-Basisteil sorgt für eine gute Korrosionsbeständigkeit bei gleichzeitig niedrigen Herstellkosten. Weiterhin bleibt der Kunststoff des Griffs aufgrund der eingeschränkten Wärmeleitung kühler und lässt sich dadurch besser bedienen.

Für den Lüfter 44, wie er beispielsweise in den Fig. 1 und 3 sichtbar ist, ist bevorzugt eine Drehzahlregelung vorgesehen. Der Lüfter wird mittels PWM abhängig von Leistungsaufnahme und Temperatur des Leistungsmoduls gesteuert, welches z.B. im Elektronikgehäuse 48 untergebracht ist. Die Drehzahl wird analog zur Leistungsaufnahme eingestellt. Die Regelung wird jedoch erst ab einer Modultemperatur von 50 °C zugelassen. Falls die Pumpe in Temperaturbereiche eines möglichen Deratings (temperaturbedingte Leistungsreduktion) hineinkommt, wird automatisch die max. Lüfterdrehzahl angesteuert. Mit dieser Regelung wird ermöglicht, dass bei kalter Pumpe ein minimaler Geräuschpegel erreicht wird, dass im Enddruck bzw. bei geringer Last ein niedriger Geräuschpegel - entsprechend dem Pumpengeräusch - herrscht, dass eine optimale Kühlung der Pumpe bei gleichzeitig niedrigem Geräuschpegel erreicht wird, und dass vor einer temperaturbedingten Leistungsreduktion die max. Kühlleistung sichergestellt wird.

Die maximale Lüfterdrehzahl kann, insbesondere situativ, anpassbar sein. Z. B. kann es für eine hohe Wasserdampfverträglichkeit zielführend sein, die maximale Lüfterdrehzahl herabzusetzen.

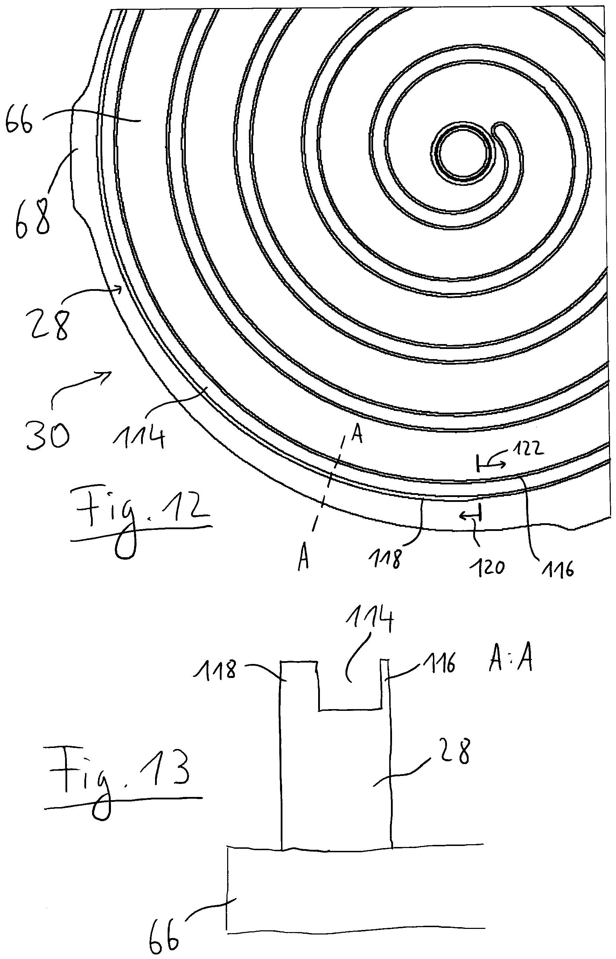

In Fig. 12 ist das bewegliche Spiralbauteil 30 teilweise und gegenüber Fig. 5 vergrößert dargestellt. Eine Schnittansicht des Spiralbauteils 30 entlang der in Fig. 12 angedeuteten Linie A:A ist in Fig. 13 schematisch und nicht maßstabsgerecht dargestellt.

Die Spiralwand 28 weist an ihrem der Grundplatte 66 abgewandten und einer Grundplatte des hier nicht dargestellten, festen Spiralbauteils 24 zugewandten Ende eine Nut 114 zur Einlage eines hier ebenfalls nicht dargestellten Dichtungselements 64 auf, nämlich eines sogenannten Tip Seals. Die Anordnung im Betriebszustand ist z.B. in Fig. 4 gut sichtbar.

Die Nut 114 ist nach außen und nach innen durch zwei gegenüberliegende Seitenwände begrenzt, nämlich durch eine innere Seitenwand 116 und eine äußere Seitenwand 118. In einem ersten Spiralabschnitt 120 ist die äußere Seitenwand 118 dicker ausgeführt als die innere Seitenwand 116 im ersten Spiralabschnitt 120 und dicker als beide Seitenwände 116 und 118 in einem anderen, zweiten Spiralabschnitt 122.

Der erste Spiralabschnitt 120 erstreckt sich vom in Fig. 12 angedeuteten Ort bis zum äußeren Ende der Spiralwand 28, wie es beispielsweise auch in Fig. 5 angedeutet ist. Der erste Spiralabschnitt 120 erstreckt sich hier beispielhaft über etwa 163°.

Der erste Spiralabschnitt 120 bildet einen äußeren Endabschnitt der Spiralwand 28. Dabei ist der erste Spiralabschnitt 120 zumindest teilweise, insbesondere vollständig in einem nicht pumpaktiven Bereich der Spiralwand 28 angeordnet. Insbesondere kann der erste Spiralabschnitt 120 den nicht pumpaktiven Bereich der Spiralwand 28 zumindest im Wesentlichen vollständig ausfüllen.

Wie es in Fig. 5 sichtbar ist, kann bevorzugt der erste Zwischenabschnitt 70 zwischen zwei Haltevorsprüngen 68, welcher eine größere radiale Höhe hat, als andere Zwischenabschnitte 72 und 74, dem ersten Spiralabschnitt 120 gegenüberliegend angeordnet sein. Eine durch die dickere Seitenwand 118 eingebrachte Unwucht kann somit durch das größere Gewicht des ersten Zwischenabschnitt 70 ausgeglichen werden.

Für eine geringe Systembelastung der Lager und anderer Bauteile sollte das bewegliche Spiralbauteil allgemein bevorzugt ein geringes Eigengewicht besitzen. Daher werden die Spiralwände generell sehr dünn ausgeführt. Weiterhin ergeben sich bei dünneren Wänden geringere Pumpenabmessungen (signifikanter Außendurchmesser). Die Seitenwände der Tip Seal-Nut sind in der Folge besonders dünn. Das Verhältnis der TipSeal-Wanddicke zur gesamten Spiralwanddicke beträgt z.B. höchstens 0,17. Aufgrund der Tip Seal-Nut ist jedoch die Spiralwandspitze sehr empfindlich gegenüber Stößen beim Handling, wie etwa bei der Montage oder beim Wechseln des Tip Seal. Durch leichte Stöße, z. B. auch beim Transport, kann die Seitenwand der Nut nach innen gedrückt werden, sodass sich das Tip Seal nicht mehr montieren lässt. Zur Lösung dieses Problems umfasst die Nut eine unsymmetrische Wanddicke, insbesondere eine nach außen lokale Aufdickung der Spiralwand. Dieser Bereich ist bevorzugt nicht pumpaktiv und kann daher mit einer größeren Toleranz gefertigt werden. Durch die einseitige Aufdickung an der, insbesondere letzten halben, Windung werden Schädigungen deutlich reduziert. An übrigen Stellen des Bauteils ist bevorzugt eine Aufdickung der Spiralwand nicht notwendig, da die Wand durch überstehende Elemente des Bauteils geschützt ist.

Die in Fig. 1 gezeigte Luftleithaube 46 definiert einen Luftstrom, wie er durch einen gestrichelten Pfeil 124 angedeutet ist. Der Lüfter 44 ist mit einer Steuerungseinrichtung in dem Elektronikgehäuse 48 über ein nicht dargestelltes Kabel, welches durch die Luftleithaube 46 verläuft, und über eine Steckverbindung verbunden. Diese umfasst eine Buchse 126 und einen Stecker 128. Die Buchse 126 ist am Elektronikgehäuse 48 gelagert und/oder an einer in dem Elektronikgehäuse 48 angeordneten Platine befestigt. Die Buchse 126 ist beispielsweise auch in den Fig. 2 und 3 sichtbar. Der Stecker 128 ist über das nicht dargestellte Kabel mit dem Lüfter 44 verbunden.

Die Steckverbindung 126, 128 ist durch eine Trennwand 130 von dem Luftstrom 124 getrennt. Der Luftstrom 124, der zum Beispiel Stäube oder ähnliche Verschmutzungen enthalten kann, wird somit von der Steckverbindung 126, 128 ferngehalten. Somit wird einerseits die Steckverbindung 126, 128 selbst geschützt und es wird andererseits verhindert, dass die Verschmutzungen durch die für die Buchse 126 vorgesehene Öffnung im Elektronikgehäuse 48 in dieses hinein und zur Steuerungseinrichtung und/oder Leistungselektronik gelangen.

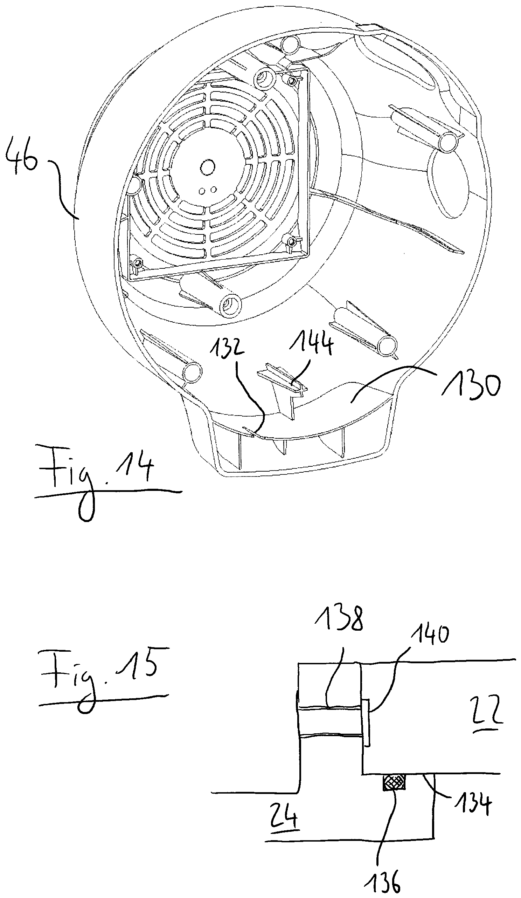

Die Luftleithaube 46 ist in Fig. 14 separat und perspektivisch dargestellt. Es ist unter anderem die Trennwand 130 mit dem dahinter definierten, für den Stecker 128 vorgesehenen Raum sichtbar. Die Trennwand 130 umfasst eine hier als V-förmige Kerbe ausgeführte Ausnehmung 132 zur Durchführung eines Kabels vom Stecker 128 zum Lüfter 44.

Z.B. zur Kostenersparnis können kostengünstige Steckverbinder ohne Abdichtung (z.B. kein IP-Schutz) zum Einsatz kommen, da die Trennwand 130 dafür sorgt, dass die angesaugte Luft nicht über den Durchbruch des Steckverbinders 126, 128 an die Elektronik gelangt. Das Kabel des Lüfters wird durch die V-förmige Kerbe 132 seitlich durch die Trennwand 130 geführt. Die Kerbe 132 weist einen seitlichen Versatz zu dem Steckverbinder 126, 128 auf, wodurch eine Labyrinthwirkung und somit eine weitere Verringerung der Leckage von Kühlluft zu dem Steckverbinder 126, 128 erreicht werden. Durch eine Trennwand 130 innerhalb der Luftleithaube 46 wird außerdem die Luftführung in den Kanal 50 zwischen Elektronikgehäuse 48 und Pumpengehäuse 22 verbessert. Es entsteht weniger Verwirbelung und Gegendruck für den Lüfter 44.

Die Fig. 15 zeigt einen Anlagebereich zwischen dem ersten Gehäuseelement 22 und dem zweiten Gehäuseelement bzw. feststehenden Spiralbauteil 24 in einer schematischen Schnittdarstellung. Das zweite Gehäuseelement 24 ist mit einer Übergangspassung 134 teilweise in das erste Gehäuseelement 22 eingesteckt. Dabei ist eine Abdichtung mittels eines O-Rings 136 vorgesehen. Die Übergangspassung 134 dient zum Beispiel auch der Zentrierung des zweiten Gehäuseelements 24 gegenüber dem ersten Gehäuseelement 22.

Zu Wartungszwecken, zum Beispiel zum Austausch des Dichtungselements 64, muss das zweite Gehäuseelement 24 zum Beispiel demontiert werden. Dabei kann es vorkommen, dass die Übergangspassung 134 oder der O-Ring 136 klemmen, wenn das zweite Gehäuseelement 24 nicht gerade genug herausgezogen wird. Zur Lösung dieses Problems ist ein Abdrückgewinde 138 vorgesehen. Bevorzugt kann auch zumindest im Wesentlichen radial gegenüberliegend ein zweites Abdrückgewinde vorgesehen sein. Zum möglichst geraden und geführten Lösen des zweiten Gehäuseelements 24 kann eine Schraube in das Abdrückgewinde 38 eingeschraubt werden, bis die Schraube aus diesem heraus hervorsteht und in Anlage mit dem ersten Gehäuseelement 22 gelangt. Durch weiteres Einschrauben werden die Gehäuseelemente 22 und 24 voneinander weggedrückt.

Zum Abdrücken können zum Beispiel die zur Befestigung des zweiten Gehäuseelements 24 am ersten Gehäuseelement 22 vorgesehenen Befestigungsschrauben 142 verwendet werden, wie sie beispielsweise in den Fig. 1 und 3 bezeichnet sind. Zu diesem Zweck weist das Abdrückgewinde 138 bevorzugt die gleiche Gewindeart auf, wie für die Befestigungsschrauben 142 vorgesehene Befestigungsgewinde.

Am zweiten Gehäuseelement 22 ist eine Senkung 140 vorgesehen, die dem Abdrückgewinde 138 zugeordnet ist. Falls beim Einschrauben der Schraube in das Abdrückgewinde 138 Abriebpartikel ausgetragen werden, sammeln sich diese in der Senkung 140. Somit wird verhindert, dass derartige Abriebpartikel zum Beispiel eine vollständige Anlage der Gehäuseelemente 22 und 24 aneinander verhindern.

Bei der Montage des festen Spiralbauteils 24 müssen die Schrauben wieder herausgedreht werden, da sonst ein vollständiges Verschrauben (Richtiger Sitz auf der Planfläche des Gehäuses) des feststehenden Spiralbauteils 24 am ersten Gehäuseelement 22 womöglich verhindert ist. Leckage, Schiefstellung und Verringerung der Pumpperformance können die Folge sein. Zur Vermeidung dieses Montagefehlers verfügt die Luftleithaube 46 über wenigstens einen, insbesondere zusätzlichen, in Fig. 14 gezeigten Dom 144, der ein Montieren der Luftleithaube 46 nur dann ermöglicht, wenn die zum Abdrücken verwendeten Schrauben, insbesondere die Befestigungsschrauben 142, wieder entfernt worden sind. Denn die Luftleithaube 46 mit dem Dom 144 ist derart ausgebildet, dass sie mit einem Schraubenkopf einer etwaig in das Abdrückgewinde 138 eingeschraubten Abdrückschraube kollidieren würde, sodass die Luftleithaube 46 nicht vollständig montierbar wäre. Insbesondere kann die Luftleithaube 46 nur bei vollständig demontierten Abdrückschrauben montiert werden.

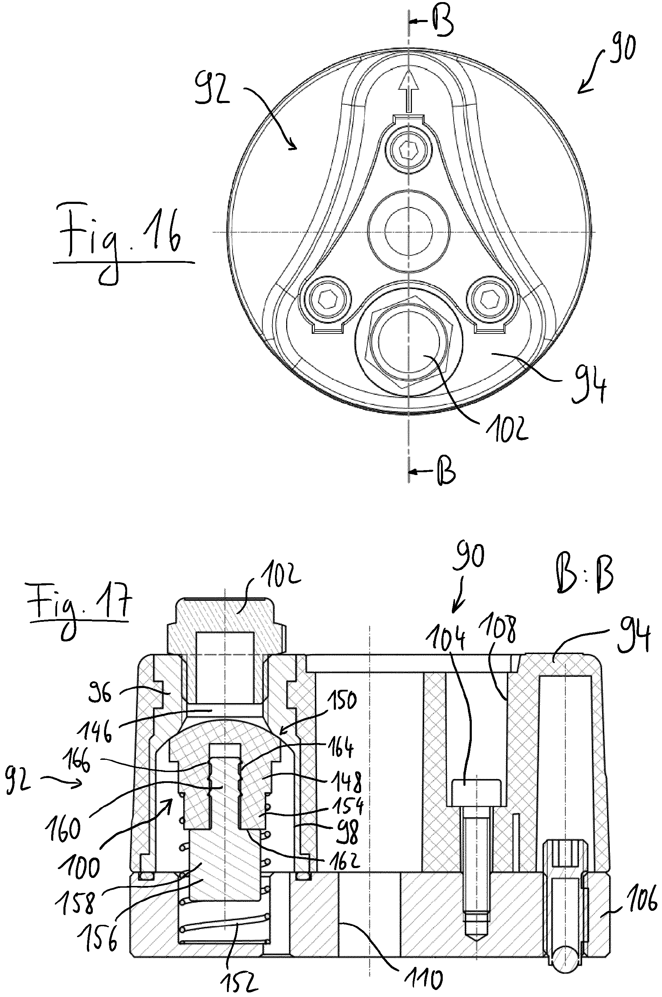

Die Fig. 16 und 17 zeigen ein Gasballastventil 90, welches demjenigen der Fig. 10 und 11 grundsätzlich ähnelt und bevorzugt an einer Scrollpumpe, z.B. der Scrollpumpe 20, angeordnet sein kann. Die Bezugszeichen sind entsprechend vergeben und es wird auf die obigen Ausführungen verwiesen. In den Fig. 16 und 17 ist das Gasballastventil 90 jeweils ohne einen Deckel 112 gezeigt, wie er oben beschrieben ist. Es versteht sich, dass ein solcher auch hier Verwendung finden kann. Nachfolgend wird das Rückschlagventil 100 des Gasballastventils 90 der Fig. 16 und 17 näher beschrieben, wobei Einzelaspekte auch für das obige Gasballastventil 90 bzw. Rückschlagventil 100 der Fig. 10 und 11 gelten, insoweit die Zeichnungen übereinstimmen.

Mit Bezug auf Fig. 17 weist das Rückschlagventil 100 einen Durchgang 146 für ein Fluid, hier für das Ballastgas, auf. Dieser ist hier mit einem Stopfen 102 lösbar verschlossen. Außerdem umfasst das Rückschlagventil 100 ein bewegliches Schließelement 148 sowie einen Dichtungssitz 150. Das bewegliche Schließelement 148 und der Dichtungssitz 150 sind derart korrespondierend ausgebildet, dass das Schließelement 148 den Durchgang 146 sperrt, wenn es sich - wie in Fig. 17 dargestellt - in Anlage mit dem Dichtungssitz 150 befindet. Die Anlageflächen von Schließelement 148 und Dichtungssitz 150 sind sphärisch ausgebildet.

Außerdem ist das Schließelement 148 mittels einer Feder 152 gegen den Dichtungssitz 150 vorgespannt. Die Feder 152 ist hier als Schraubendruckfeder ausgeführt. Sie ist einerseits am drehbaren Element 106 abgestützt und liegt andererseits am Schließelement 148 an. Dabei erstreckt sich das Schließelement 148 mit einem Federdornabschnitt 154 in einen Innenbereich der Feder 152 hinein. Dies dient insbesondere einer präzisen Führung des Schließelements 148 in Bezug auf die Feder 152. Das Masseelement 152 ist zumindest teilweise im Innenbereich der Feder 152 angeordnet, was einen kompakten Aufbau ermöglicht.

Das Rückschlagventil 100 umfasst ferner ein Masseelement 156, welches mit dem Schließelement 148 fest verbunden ist. Während das Schließelement 148 hier beispielhaft aus Kunststoff hergestellt ist, ist das Masseelement 156 zum Beispiel aus Metall, bevorzugt Stahl, hergestellt. Das Masseelement 156 verleiht somit der beweglichen Baugruppe aus Schließelement 148 und Masseelement 156 eine deutlich größere Masse, als das Schließelement 148 alleine hätte. Damit weist diese Baugruppe eine hohe Trägheit auf, was wie oben beschrieben zur Reduktion von Schallemissionen im Betrieb des Gasballastventils 90 in einem Vakuumgerät, insbesondere einer Vakuumpumpe, vorzugsweise einer Scrollpumpe, führt.

Das Masseelement 156 umfasst einen Masseabschnitt 158, der zu dem Zweck, eine hohe Masse zu erreichen, möglichst groß ausgeführt ist. Außerdem umfasst das Masseelement 156 einem Verbindungsabschnitt 160, der zu dem Zweck ausgebildet ist, eine Verbindung zum Schließelement 148 herzustellen. Der Masseabschnitt 158 und der Verbindungsabschnitt 160 sind durch einen Absatz 162 voneinander getrennt.

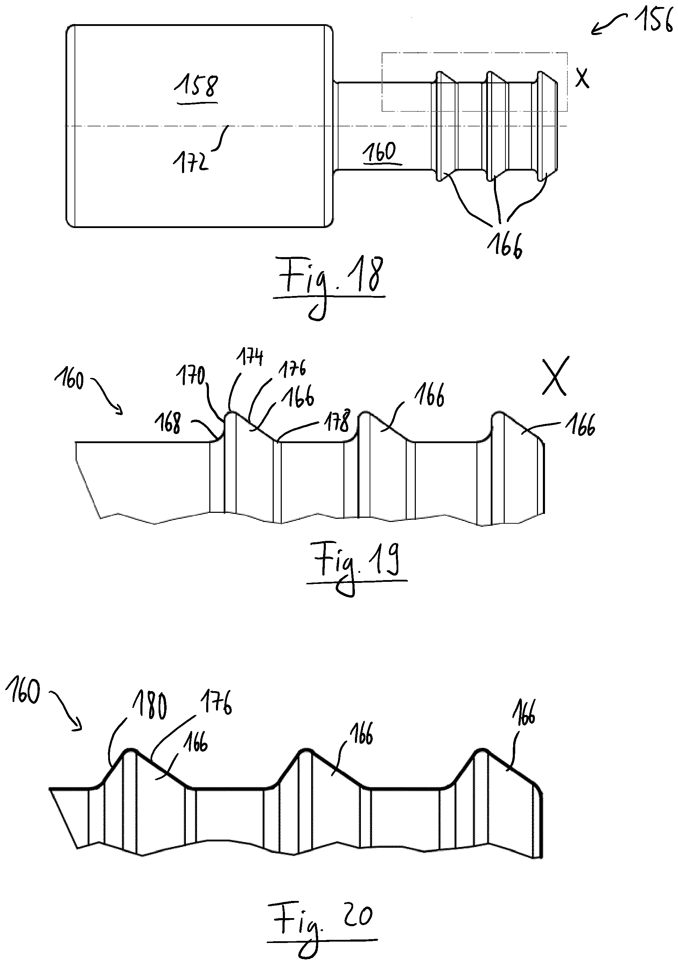

Die Verbindung zwischen Masseelement 156 und Schließelement 148 ist hier derart ausgeführt, dass der Verbindungsabschnitt 160 des Masseelements 156 in eine Ausnehmung 164 des Schließelements 148 eingesteckt ist. Um das Masseelement 156 bzw. den Verbindungsabschnitt 160 in der Ausnehmung zu halten, weist der Verbindungsabschnitt 160 mehrere Erhebungen 166 auf, die als Widerhaken wirken. Auf die Erhebungen 166 wird nachfolgend mit Bezug auf die Fig. 18 bis 20 noch näher eingegangen. Alternativ zu den Erhebungen 166 könnte der Verbindungsabschnitt 160 beispielsweise auch ein Gewinde aufweisen und in das Schließelement 148 eingeschraubt sein. Auch eine bloße Presspassung, etwa zwischen einem zylindrischen Verbindungsabschnitt 160 und einer zylindrischen Ausnehmung 164, ist denkbar.

Das Masseelement 156 ist in diesem Ausführungsbeispiel auf einer Seite des Schließelements 148 angeordnet, welche der Anlagefläche des Schließelements 148 zur Anlage mit dem Dichtungssitz 150 abgewandt ist. Grundsätzlich ist auch eine umgekehrte Anordnung denkbar. So könnte sich das Masseelement 156 etwa auch ausgehend vom Schließelement 148 in Fig. 17 nach oben erstrecken, wobei die Verbindungsmittel entsprechend anzupassen wären. Vereinfacht ausgedrückt kann das Masseelement 156 also beispielsweise in einer Sperrrichtung, welche in Fig. 17 von unten nach oben verläuft, vor dem Schließelement 148 angeordnet sein, wie es in Fig. 17 der Fall ist, und/oder auch in Sperrrichtung hinter dem Schließelement 148. Grundsätzlich könnte das Masseelement 156 auch in das Schließelement 148 vollständig integriert sein.

In Fig. 18 ist eine beispielhafte Ausführungsform eines Masseelements 156 näher veranschaulicht. Das Masseelement 156 umfasst einen Masseabschnitt 158 und einen Verbindungsabschnitt 160. Der Masseabschnitt 158 und der Verbindungsabschnitt 160 sind im Wesentlichen zylindrisch ausgebildet. Bei dem Masseelement 156 kann es sich beispielsweise um ein Drehteil, d.h. ein durch Drehen hergestelltes Bauteil, handeln.

Der Verbindungsabschnitt 160 ist mit umlaufenden Erhebungen 166 ausgestattet, die im mit einem Schließelement 148 verbundenen Zustand Widerhaken bilden und den Verbindungsabschnitt 160 in einer entsprechenden Ausnehmung 164 des Schließelements 148 halten. Die Ausnehmung 164 kann zum Beispiel zu den Erhebungen 166 korrespondierende, vorgeformte, umlaufende Ausnehmungen aufweisen. Alternativ können die Erhebungen 166 das Material des Schließelements 148 beim Einführen des Verbindungsabschnitts 160 in die Ausnehmung 164 teilelastisch verformen und anschließen durch elastische Kräfte in der Ausnehmung 164 halten, wobei sich durch die Form der Erhebungen 166 eine Hemmung gegen ein Entfernen des Verbindungsabschnitt 160 aus der Ausnehmung 164 ausbildet.

In der in Fig. 18 gezeigten Ausführungsform sind drei Erhebungen 166 vorgesehen. Diese Anzahl hat sich als besonders vorteilhaft im Hinblick auf die Festigkeit der Verbindung erwiesen. Es können aber beispielsweise auch mehr oder weniger Erhebungen vorgesehen sein.

In Fig. 18 ist ein Teilbereich X gekennzeichnet, der in Fig. 19 vergrößert dargestellt ist. Insbesondere ist die Form der Erhebungen 166 hier gut sichtbar. In dieser Ausführungsform sind die drei Erhebungen 166 im Wesentlichen identisch ausgeführt, weshalb die Form lediglich anhand der in Fig. 19 linken Erhebung 166 näher veranschaulicht wird.

Die Erhebung 166 umfasst eine Rundung 168, eine Ringfläche 170, welche sich senkrecht zur in Fig. 18 angedeuteten Zylinderachse 172 erstreckt, eine Rundung 174, einen kegelförmigen Abschnitt 176 sowie eine weitere Rundung 178. Die Rundungen können grundsätzlich entfallen.

In Fig. 20 ist ein Verbindungsabschnitt 160 in einer Darstellung gezeigt, die derjenigen der Fig. 19 ähnelt. Hier sind ebenfalls drei Erhebungen 166 vorgesehen, die denjenigen der Fig. 19 ähneln. Als Unterschied ist hier allerdings hervorzuheben, dass anstelle einer zur Zylinderachse 172 senkrechten Fläche 170 ein weiterer kegelförmiger Abschnitt 180 vorgesehen ist. Dieser ist in Bezug auf den kegelförmigen Abschnitt 176 entgegengesetzt kegelförmig.

**Bezugszeichenliste**

| | |
|---|---|
| 20 | Scrollpumpe |
| 22 | erstes Gehäuseelement |
| 24 | zweites Gehäuseelement/feststehendes Spiralbauteil |
| 26 | Spiralwand |
| 28 | Spiralwand |
| 30 | bewegliches Spiralbauteil |
| 32 | Exzenterwelle |
| 34 | Motor |
| 36 | Wälzlager |
| 38 | Exzenterzapfen |
| 40 | Wälzlager |
| 42 | Wellbalg |
| 44 | Lüfter |
| 46 | Luftleithaube |
| 48 | Elektronikgehäuse |
| 50 | Kanal |
| 52 | Kammer |
| 54 | Rippe |
| 56 | Ausnehmung |
| 58 | Rippe |
| 60 | Drucksensor |
| 62 | Kanal |
| 64 | Dichtungselement |
| 66 | Grundplatte |
| 68 | Haltevorsprung |
| 70 | erster Zwischenabschnitt |
| 72 | zweiter Zwischenabschnitt |
| 74 | dritter Zwischenabschnitt |
| 76 | Einspannvorrichtung |
| 78 | Dreibackenfutter |
| 80 | Ausnehmung |
| 82 | Ausgleichsgewicht |
| 84 | Befestigungsbohrung |
| 86 | Wellenabsatz |
| 88 | Gehäuseschulter |
| 90 | Gasballastventil |
| 92 | Betätigungsgriff |
| 94 | Kunststoffkörper |

96 Basiselement
98 Bohrung
100 Rückschlagventil
102 Stopfen
104 Befestigungsschraube
106 drehbares Element
108 Bohrung
110 Bohrung
112 Deckel
114 Nut
116 innere Seitenwand
118 äußere Seitenwand
120 erster Spiralabschnitt
122 zweiter Spiralabschnitt
124 Luftstrom
126 Buchse
128 Stecker
130 Trennwand
132 Ausnehmung
134 Übergangspassung
136 O-Ring
138 Abdrückgewinde
140 Senkung
142 Befestigungsschraube
144 Dom
146 Durchgang
148 Schließelement
150 Dichtungssitz
152 Feder
154 Federdornabschnitt
156 Masseelement
158 Masseabschnitt
160 Verbindungsabschnitt
162 Absatz
164 Ausnehmung
166 Erhebung
168 Rundung
170 Ringfläche
172 Zylinderachse
174 Rundung
176 kegelförmigen Abschnitt
178 Rundung
180 kegelförmigen Abschnitt

**Patentansprüche**

1. Vakuumpumpe, insbesondere Scrollpumpe (20), mit einem Rückschlagventil (100) umfassend

   einen Durchgang (146) für ein Fluid,
   ein bewegliches Schließelement (148) und einen Dichtungssitz (150), wobei das Schließelement (148) und der Dichtungssitz (150) derart korrespondierend ausgebildet sind, dass das Schließelement (148) den Durchgang sperrt, wenn es sich in Anlage mit dem Dichtungssitz (150) befindet, **gekennzeichnet durch**
   ein Masseelement (156), welches von dem Schließelement (148) separat ausgeführt ist und mit dem Schließelement (148) verbunden ist,
   wobei das Schließelement (148) mittels einer Feder (152) gegen den Dichtungssitz (150) vorgespannt ist, und
   wobei das Masseelement (156) und das Schließelement (148) zusammen eine Masse m aufweisen und wobei die Feder (148) eine Federkonstante k aufweist, wobei das Verhältnis k/m höchstens 110.000 s$^{-2}$ beträgt.

2. Vakuumpumpe nach Anspruch 1,
   wobei das Masseelement (156) wenigstens die gleiche Masse aufweist, wie das Schließelement (148).

3. Vakuumpumpe nach Anspruch 1 oder 2,
   wobei das Masseelement (156) und das Schließelement (148) unterschiedliche Materialen aufweisen, wobei das Material des Masseelements (156) eine höhere Dichte aufweist als das Material des Schließelements (148).

4. Vakuumpumpe nach zumindest einem der vorstehenden Ansprüche, wobei das Material des Masseelements (156) eine Dichte aufweist, die wenigstens doppelt so hoch ist, wie die Dichte des Materials des Schließelements (148).

5. Vakuumpumpe nach wenigstens einem der vorstehenden Ansprüche, wobei das Schließelement (148) aus Kunststoff hergestellt ist und/oder wobei das Masseelement (156) aus Metall hergestellt ist.

6. Vakuumpumpe nach wenigstens einem der vorstehenden Ansprüche, wobei das Masseelement (156) mit dem Schließelement (148) fest verbunden ist.

7. Vakuumpumpe nach wenigstens einem der vorstehenden Ansprüche, wobei das Masseelement (156) mit dem Schließelement (148) durch eine kraftschlüssige, formschlüssige und/oder stoffschlüssige Verbindung verbunden ist.

8. Vakuumpumpe nach wenigstens einem der vorstehenden Ansprüche, wobei das Masseelement (156) mit dem Schließelement (148) durch eine Schraubverbindung, eine Rastverbindung, eine Pressverbindung, durch wenigstens einen Widerhaken und/oder durch eine Verkantung verbunden ist.

9. Vakuumpumpe nach wenigstens einem der vorstehenden Ansprüche, wobei das Schließelement (148) und/oder der Dichtungssitz (150) eine sphärische oder kegelförmige Anlagefläche zur Anlage mit dem Dichtungssitz (150) bzw. dem Schließelement (148) aufweist.

**10.** Vakuumpumpe nach wenigstens einem der vorstehenden Ansprüche, wobei das Schließelement (148) eine Anlagefläche zur Anlage mit dem Dichtungssitz (150) aufweist und wobei das Masseelement (156) auf einer der Anlagefläche abgewandten Seite des Schließelements (148) angeordnet ist und/oder
wobei in einer Sperrrichtung des Rückschlagventils (100) das Masseelement (156) vor dem Schließelement (148) angeordnet ist.

**11.** Vakuumpumpe nach wenigstens einem der vorstehenden Ansprüche, wobei das Masseelement (156) im Innenbereich einer Feder (152) angeordnet ist.

**12.** Vakuumpumpe nach einem der vorstehenden Ansprüche,
mit einem Gasballastventil (90), wobei das Rückschlagventil (100) zur Steuerung der Strömung durch das Gasballastventil (90) angeordnet ist.


**Claims**

**1.** A vacuum pump, in particular a scroll pump (20), comprising a check valve (100) comprising

> a passage (146) for a fluid,
> a movable closing element (148) and a seal seat (150), wherein the closing element (148) and the seal seat (150) are configured as corresponding such that the closing element (148) blocks the passage when said closing element (148) is in contact with the seal seat (150),
> **characterized by**
> a mass element (156) which is designed separately from the closing element (148) and which is connected to the closing element (148), wherein the closing element (148) is preloaded against the seal seat (150) by means of a spring (152), and
> wherein the mass element (156) and the closing element (148) together have a mass m and wherein the spring (148) has a spring constant k, wherein the ratio k/m is at most 110,000 $s^{-2}$.

**2.** A vacuum pump according to claim 1,
wherein the mass element (156) has at least the same mass as the closing element (148).

**3.** A vacuum pump according to claim 1 or 2,
wherein the mass element (156) and the closing element (148) have different materials, wherein the material of the mass element (156) has a higher density than the material of the closing element (148).

**4.** A vacuum pump according to at least one of the preceding claims, wherein the material of the mass element (156) has a density which is at least twice as high as the density of the material of the closing element (148).

**5.** A vacuum pump according to at least one of the preceding claims, wherein the closing element (148) is made of plastic and/or wherein the mass element (156) is made of metal.

**6.** A vacuum pump according to at least one of the preceding claims, wherein the mass element (156) is fixedly connected to the closing element (148).

**7.** A vacuum pump according to at least one of the preceding claims, wherein the mass element (156) is connected to the closing element (148) by a force-fitting, form-fitting and/or bonded connection.

**8.** A vacuum pump according to at least one of the preceding claims, wherein the mass element (156) is connected to the closing element (148) by a screw connection, a snap-in connection, a press connection, by at least one barbed hook and/or by a canting.

**9.** A vacuum pump according to at least one of the preceding claims, wherein the closing element (148) and/or the seal seat (150) has/have a spherical or conical contact surface for contact with the seal seat (150) or the closing element (148).

**10.** A vacuum pump according to at least one of the preceding claims, wherein the closing element (148) has a contact surface for contact with the seal seat (150) and wherein the mass element (156) is arranged at a side of the closing element (148) facing away from the contact surface, and/or wherein the mass element (156) is arranged in front of the closing element (148) in a blocking direction of the check valve (100).

**11.** A vacuum pump according to at least one of the preceding claims, wherein the mass element (156) is arranged in the inner region of a spring (152).

**12.** A vacuum pump according to any one of the preceding claims, comprising a gas ballast valve (90), wherein the check valve (100) is arranged to control the flow through the gas ballast valve (90).


**Revendications**

**1.** Pompe à vide, en particulier pompe à spirales (20), comprenant un clapet anti-retour (100) qui comprend

> un passage (146) pour un fluide,

un élément d'obturation mobile (148) et un siège d'étanchéité (150), l'élément d'obturation (148) et le siège d'étanchéité (150) étant réalisés de manière à correspondre de telle sorte que l'élément d'obturation (148) bloque le passage lorsqu'il est en appui contre le siège d'étanchéité (150), **caractérisée par**

un élément de masse (156) qui est réalisé séparément de l'élément d'obturation (148) et qui est relié à l'élément d'obturation (148),

l'élément d'obturation (148) étant précontraint vers le siège d'étanchéité (150) au moyen d'un ressort (152),

l'élément de masse (156) et l'élément d'obturation (148) ayant conjointement une masse m, et le ressort (152) ayant une constante de rappel k, le rapport k/m étant au maximum de 110.000 s$^{-2}$.

2. Pompe à vide selon la revendication 1,
dans laquelle l'élément de masse (156) a au moins la même masse que l'élément d'obturation (148).

3. Pompe à vide selon la revendication 1 ou 2,
dans laquelle l'élément de masse (156) et l'élément d'obturation (148) comprennent des matériaux différents, le matériau de l'élément de masse (156) ayant une densité supérieure à celle du matériau de l'élément d'obturation (148).

4. Pompe à vide selon l'une au moins des revendications précédentes, dans laquelle le matériau de l'élément de masse (156) a une densité qui est au moins deux fois plus élevée que la densité du matériau de l'élément d'obturation (148).

5. Pompe à vide selon l'une au moins des revendications précédentes, dans laquelle l'élément d'obturation (148) est fabriqué en matière plastique et/ou l'élément de masse (156) est fabriqué en métal.

6. Pompe à vide selon l'une au moins des revendications précédentes, dans laquelle l'élément de masse (156) est solidaire de l'élément d'obturation (148).

7. Pompe à vide selon l'une au moins des revendications précédentes, dans laquelle l'élément de masse (156) est relié à l'élément d'obturation (148) par une liaison par adhérence, par complémentarité de forme et/ou par une liaison de matière.

8. Pompe à vide selon l'une au moins des revendications précédentes, dans laquelle l'élément de masse (156) est relié à l'élément d'obturation (148) par une liaison vissée, une liaison par encliquetage, une liaison par ajustement serré, par au moins un crochet et/ou par un coincement.

9. Pompe à vide selon l'une au moins des revendications précédentes, dans laquelle l'élément d'obturation (148) et/ou le siège d'étanchéité (150) présente(nt) une surface d'appui sphérique ou conique pour l'appui contre le siège d'étanchéité (150) ou contre l'élément d'obturation (148).

10. Pompe à vide selon l'une au moins des revendications précédentes, dans laquelle l'élément d'obturation (148) présente une surface d'appui pour l'appui contre le siège d'étanchéité (150), et l'élément de masse (156) est disposé sur un côté de l'élément d'obturation (148) détourné de la surface d'appui, et/ou
l'élément de masse (156) est disposé en amont de l'élément d'obturation (148) dans une direction de blocage du clapet anti-retour (100).

11. Pompe à vide selon l'une au moins des revendications précédentes, dans laquelle l'élément de masse (156) est disposé dans la zone intérieure d'un ressort (152).

12. Pompe à vide selon l'une des revendications précédentes, comprenant une vanne de ballast à gaz (90), le clapet anti-retour (100) étant agencé pour commander l'écoulement à travers la vanne de ballast à gaz (90).

Fig. 1

Fig. 2

EP 3 708 840 B1

Fig.3

Fig. 4

Fig.5

Fig.6

Fig. 7

Fig. 8

Fig. 9

Fig. 10

Fig. 11

Fig. 12

Fig. 13

A:A

Fig. 14

Fig. 15

Fig. 16

Fig. 17

B:B

25

156

158

172

160

X

166

Fig. 18

160

170 174 176
168 166
178 166
X
166

Fig. 19

160

180 176
166
166
166

Fig. 20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3739166 A2
- EP 3647599 A2
- US 4973230 A
- DE 10046768 B4
- US 5810572 A